# EUROPÄISCHE PATENTANMELDUNG

(11) **EP 1 974 909 A1**
(43) Veröffentlichungstag der Anmeldung: **01.10.2008**
(21) Anmeldenummer: 08005023.0
(22) Anmeldetag: 18.03.2008
(51) Int. Cl.: B32B 27/08, B65D 65/46

(54) **Mehrschichtige Folie und Verpackung aus dieser Folie**

(30) Priorität: 29.03.2007 DE 102007015554
(71) Anmelder: Hans Adler OHG, 79848 Bonndorf (DE); Högg, Klaus-Josef, 79848 Bonndorf (DE)
(72) Erfinder: Högg, Klaus-Josef, 79848 Bonndorf (DE)
(74) Vertreter: Mussgnug, Bernd

(57) **Zusammenfassung**

Zur Verpackung von Lebensmitteln und Futtermitteln, die vor Sauerstoff geschützt werden, aber Feuchtigkeit abgeben sollen, wird eine mehrschichtige Folie vorgeschlagen, die zumindest eine Sperrschicht und eine Siegelschicht aufweist. Die Sperrschicht zeichnet sich durch eine hohe Barrierefunktion für Gas, insbesondere Sauerstoff und eine gute Wasserdampfdurchlässigkeit aus. Die Siegelschicht gewährleistet gute Siegeleigenschaften und eine hohe Wasserdampfdurchlässigkeit.

## Beschreibung

Die Erfindung betrifft eine mehrschichtige Folie, insbesondere zur Verpackung von Lebensmitteln und Futtermitteln, sowie eine Verpackung bestehend aus einer solchen Folie.

Zur Verpackung von Lebensmitteln und Futtermitteln werden in großem Umfang Folien verwendet. Um die verpackten Lebensmittel oder Futtermittel frisch zu halten, werden Folien verwendet, die eine Gassperrschicht aufweisen (z.B. DE 10 2004 062 204 A1). Die Gassperrschicht verhindert den Eintritt und den Austritt von Gasen. Insbesondere soll dabei verhindert werden, dass Sauerstoff an die Lebensmittel gelangt, der Fäulnis und Schimmelbildung begünstigt, und dass gegebenenfalls in die Packung eingebrachte Schutzgase, wie z. B. Stickstoff oder Kohlendioxid entweichen. Solche Gassperrschichten enthalten z.B. im Wesentlichen Polyamid, lackiertes Zellglas, Ethylen-Vinylalkohol-Polymere (EVOH) oder andere Vinylalkohol-Polymere (PVOH) oder sind auch mehrschichtig aus diesen Materialien aufgebaut. Um die Lebensmittel vor einem Austrocknen zu schützen, werden die Verpackungsfolien üblicherweise auch mit einer zusätzlichen Schicht als Wasserdampfsperre versehen. Um diese Sperrschicht-Folien verschweißbar zu machen, werden diese üblicherweise mit einer Siegelschicht versehen, die z.B. aus Polyolefinen und insbesondere Polyethylen besteht.

Die Sperrschicht-Folie aus Polyamid und/oder EVOH ist an sich wasserdampfdurchlässig und weist schlechte Siegeleigenschaften auf, d.h. eignet sich nicht für ein Schweißen, wie dies für die Verpackung von Lebensmitteln und Futtermitteln in der Regel notwendig ist. Die als Wasserdampf-Sperre dienende zusätzliche Schicht weist gute Siegeleigenschaften auf, so dass durch diese Schicht zum einen eine schweißbare Verpackungsfolie erhalten wird und zum Zweiten diese Verpackungsfolie auch in der im Allgemeinen erwünschten Weise zusätzlich wasserdampfdicht ist.

Bei bestimmten Lebensmitteln und Futtermitteln, insbesondere z.B. bei Rohwürsten wie Landjäger, Salami und dergleichen und auch bei bestimmten Hartkäse-Sorten ist eine solche luft- und wasserdampfdichte Verpackung jedoch nicht optimal. Eine solche Verpackung verhindert zwar das Eindringen von Sauerstoff und damit das Schimmelwachstum, die verpackten Lebensmittel können jedoch nicht abtrocknen, so dass die im Inneren der Lebensmittel, z.B. der Rohwürste noch vorhandene Restfeuchtigkeit zu einem unerwünschten Aufweichen der Lebensmittel führt. Um dieses Aufweichen der Würste zu verhindern, werden bisher perforierte Verpackungsfolien verwendet. Diese Folien lassen zwar ein Trocknen der verpackten Lebensmittel zu, durch die Perforationen kann jedoch auch wiederum Sauerstoff an die Lebensmittel gelangen und zur Schimmelbildung führen. Weiter ist es bekannt, die Oberfläche der Lebensmittel, z.B. von Rohwürsten und Schinken mit Substanzen, wie z.B. dem Konservierungsmittel Kaliumsorbat oder "künstlichem Schimmel" zu behandeln, die das Schimmelwachstum behindern. Eine solche Oberflächenbehandlung ist jedoch ein zusätzlicher aufwändiger Verfahrensschritt bei der Herstellung der Lebensmittel.

Der Erfindung liegt daher die Aufgabe zugrunde, eine Verpackung für Lebensmittel und Futtermittel zu schaffen, die die genannten Probleme beseitigt oder verringert.

Diese Aufgabe wird erfindungsgemäß gelöst durch eine mehrschichtige Folie mit den Merkmalen des Patentanspruchs 1 sowie durch eine Verpackung, die im Wesentlichen aus einer solchen Folie besteht.

Vorteilhafte Ausführungen der Erfindung sind in den Unteransprüche angegeben.

Erfindungsgemäß wird eine Folie zur Verpackung von Lebensmitteln und Futtermitteln zur Verfügung gestellt, die Schutzgase in der Verpackung hält und die Lebensmittel vor Sauerstoff schützt, jedoch die Abgabe von Feuchtigkeit zulässt. Diese Folie weist eine Sperrschicht auf, die eine hohe Barrierefunktion für Gase mit einer guten Wasserdampfdurchlässigkeit vereinigt. Diese Sperrschicht erfüllt damit die Forderungen, Sauerstoff von den verpackten Lebensmitteln fernzuhalten und das Schimmelwachstum zu verhindern, eventuell in die Verpackung eingebrachte Schutzgase in der Verpackung zu halten und gleichzeitig eine Feuchtigkeitsabgabe der Lebensmittel und damit ein Nachtrocknen der verpackten Lebensmitteln zu ermöglichen. Um eine solche Folie auch schweißbar zu machen, so dass sich die Folie auch als Verpackungsfolie eignet, weist die Folie zusätzlich eine oberflächliche Siegelschicht auf, die gute Siegeleigenschaften besitzt. Außerdem beeinflusst und beeinträchtigt die Siegelschicht die funktionalen Eigenschaften der Sperrschicht nicht, d. h. die Siegelschicht weist zumindest ebenfalls eine hohe Wasserdampfdurchlässigkeit auf. Da die Gasbarriere durch die Sperrschicht bewirkt wird, kann die Siegelschicht auch gasdurchlässig sein. Unter "Gasbarriere" bzw. "gasdurchlässig" wird eine Barriere bzw. Durchlässigkeit für Substanzen verstanden, die bei normalen Umgebungstemperaturen gasförmig sind, insbesondere für Sauerstoff, Stickstoff und Kohlendioxid.

Die mehrschichtige Folie weist zumindest eine Sperrschicht mit einer hohen Barrierefunktion für Gase auf, sodass keine Gase und insbesondere kein Sauerstoff an das verpackte Gut gelangen kann. Alle Schichten der mehrschichtigen Folie weisen eine hohe Wasserdampfdurchlässigkeit auf, sodass von dem verpackten Gut abgegebene Feuchtigkeit durch die mehrschichtige Folie nach außen dringen kann.

Als Werkstoff für die Sperrschicht eignen sich Polyamide, lackiertes Zellglas, Ethylen-Vinylalkohol-Polymere (EVOH) oder andere Vinylalkohol-Polymere (PVOH). Die Sperrschicht kann im Wesentlichen aus einem dieser Werkstoffe bestehen. Es ist auch möglich, die Sperrschicht selbst mehrschichtig aufzubauen, z.B. aus einer EVOH-Schicht, die einseitig oder beidseitig mit einer Polyamid-Schicht versehen ist. Diese mehrschichtige Sperrschicht kann durch Koextrusion oder durch Kaschieren und/oder Lackieren hergestellt werden.

Wesentlich für die Auswahl der Werkstoffe der Sperrschicht und für die Dicke der Sperrschicht sind die Durchlässigkeitszahlen für Gase, insbesondere für Sauerstoff sowie für Wasserdampf. Die Durchlässigkeit für Gase soll möglichst gering, die Durchlässigkeit für Wasserdampf möglichst hoch sein. Vorzugsweise wird eine Sperrschicht verwendet, deren Durchlässigkeitszahl für molekularen Sauerstoff kleiner ist als 35 cm³/m² in 24 h bei einer Partialdruckdifferenz von 1 dbar, bei einer Temperatur von 23°C und bei 0% relativer Luftfeuchtigkeit. Die Durchlässigkeitszahl für Wasserdampf wird vorzugsweise dem Abtrocknungsverhalten des jeweiligen Lebens- oder Futtermittels angepasst. Beispielsweise kann eine Wasserdampf-Durchlässigkeitszahl größer als 20 g/m² bei einer Partialdruckdifferenz von 1dbar, einer Temperatur von 23°C und 85% relativer Feuchtigkeit gewählt werden.

Werkstoffe, die diese Anforderungen bezüglich der Gasbarrierefunktion und der Wasserdampfdurchlässigkeit erfüllen, sind dem Fachmann bekannt. Vorzugsweise werden Polyamid, lackiertes Zellglas, EVOH und/oder andere PVOH einschichtig oder in Kombination mehrschichtig verwendet.

Um die Folie zur Verwendung als Verpackungsmaterial schweißbar zu machen, ist die Siegelschicht vorgesehen, die gute Siegeleigenschaften aufweist und zumindest die Wasserdampfdurchlässigkeit der gesamten Folie nicht behindert.

Für diese Siegelschicht wird vorzugsweise ein Werkstoff verwendet, der im Wesentlichen aus Polyhydroxycarbonsäure besteht. Vorzugsweise werden solche Polyhydroxycarbonsäuren verwendet, die aus Hydroxycarbonsäure aufgebaut sind, welche aus Naturstoffen gewonnen werden. Diese Materialien sind auch biologisch abbaubar. Es können somit regenerative Rohstoffe für die Herstellung der Folie verwendet werden und die Verpackungen sind in ökologisch vorteilhafter Weise biologisch abbaubar.

Bevorzugte Beispiele für solche aus Naturstoffen gewonnenen Hydroxycarbonsäuren sind die sogenannten Genusssäuren und Fruchtsäuren. Unter dem Begriff Genusssäuren werden Essig-, Milch-, Zitronen-, Apfel-, Wein-, Bernstein-, Adipin- und Fumarsäure zusammengefasst. Der Begriff überschneidet sich teilweise mit Fruchtsäuren. Insbesondere eignet sich Polymilchsäure als Werkstoff für die Siegelschicht. Polymilchsäure-Folien (Polylactat-Folien, PLA-Folien) zeichnen sich durch gute Siegelfestigkeit bei niedrigen Siegeltemperaturen aus, wodurch sie sich besonders für das Einschweißen von Lebensmitteln und Futtermitteln eignen. Die PLA-Folie ist vollständig biologisch abbaubar und kann aus landwirtschaftlich anbaubaren Pflanzen hergestellt werden. Weiter kommen auch Cellulosederivate, insbesondere lackiertes Zellglas als Siegelmedium in Betracht.

Die Siegelschicht erfüllt die Funktion, die Verpackungsfolie schweißbar zu machen. Vorteilhafterweise kann die Siegelschicht mit einer geringen Schichtdicke ausgebildet sein und eine hohe Gas- und Wasserdampfdurchlässigkeit aufweisen.

Die Sperrschicht und die Siegelschicht können koextrudiert werden, um ein mehrschichtiges Laminat zu bilden. Ebenso ist es möglich, die Sperrschicht und die Siegelschicht im Laminier- bzw. Kaschierverfahren miteinander zu verbinden, oder die Siegelschicht durch Lackieren aufzubringen.

Die gesamte mehrschichtige Folie ist vorzugsweise durchsichtig, um die verpackten Lebensmittel für den Verbraucher sichtbar zu machen. Außerdem kann die Folie vorzugsweise bedruckt werden.

Vorzugsweise wird die Sperrschicht aus folgender Gruppe von Barrierefilmen ausgewählt:

Polyamid-Gießfilme, Polyamid-Streckfilme, durch Gießen oder Streckformen hergestellte Polyamid-EVOH-Polyamid-Mehrschichtfilme, Zellglas-Lackierung, Trägerfilm mit PVOH.

Die Siegelschicht wird vorzugsweise aus folgender Gruppe von Siegelfilmen ausgewählt:
PLA-Filme, PLA-Beschichtung, Zellglas-Lackierung.

Die genannten Barrierefilme und Siegelfilme können in jeder Kombination verwendet werden.

In einer bevorzugten Ausführung wird die Sperrschicht dreilagig aus zwei Polyamid-Lagen und einer dazwischen angeordneten EVOH-Lage koextrudiert und längsgestreckt. Die Sperrschicht weist eine Stärke von 15 µ bis 25 µ auf. Die Sperrschicht wird mit einer PLA-Siegelschicht durch Verkleben kaschiert. Die PLA-Siegelschicht weist eine Stärke von 20 µ bis 30 µ auf.

Bei einer Verwendung als Verpackungsfolie bildet die Sperrschicht die Außenseite der Verpackung, während die Siegelschicht die Innenseite der Verpackung bildet, um mit einer entsprechenden zweiten Folie oder einem sonstigen Verpackungsmaterial verschweißt werden zu können.

In der Zeichnung ist ein Ausführungsbeispiel der Erfindung dargestellt. Es zeigen
Fig. 1 einen Schnitt einer mehrschichtigen Folie gemäß der Erfindung und
Fig. 2 die Verwendung einer solchen Folie als Verpackung.

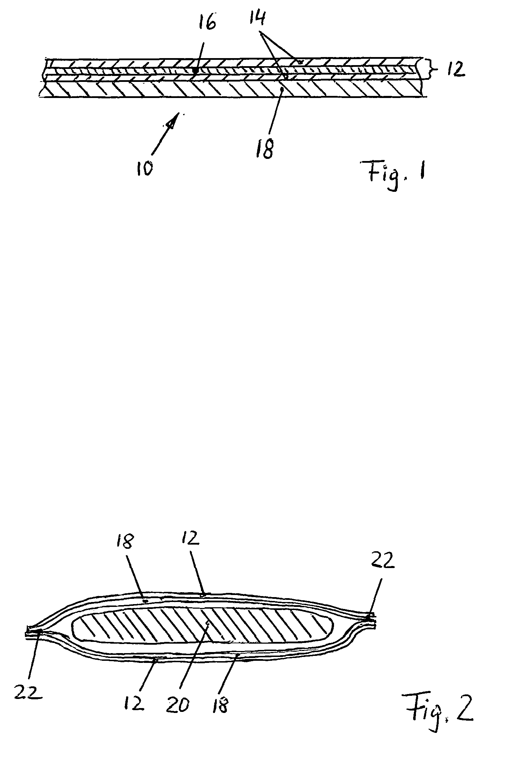

Figur 1 zeigt den Aufbau der mehrschichtigen Folie 10. Die Folie weist eine Sperrschicht 12 auf, die eine hohe Barrierefunktion für Gase und eine gute Wasserdampfdurchlässigkeit aufweist. Die Sperrschicht 12 ist dreilagig aus zwei Polyamid-Lagen 15 und einer dazwischen angeordneten EVOH-Lage 16 koextrudiert. Die Sperrschicht 12 ist mit einer Polylaktat-Schicht 18 Klebstoff kaschiert. Die Polylaktat-Schicht 18 weist gute Siegeleigenschaften und eine hohe Wasserdampfdurchlässigkeit auf.

In Figur 2 wird die Verwendung der mehrschichtigen Folie als Verpackung für ein Lebensmittel 20 gezeigt. Das Lebensmittel 20 wird so zwischen den Folien 10 angeordnet, dass die Siegelschicht 18 der Folien jeweils auf der dem Lebensmittel 20 zugewandten Innenseite angeordnet ist, während die Sperrschicht 12 die Außenseite der Verpackung bildet. An den Rändern 22 der Verpackung werden dann die aneinander anliegenden Siegelschichten 18 der Folien miteinander verschweißt.

## Patentansprüche

1. Mehrschichtige Folie, insbesondere zur Verpackung von Lebensmitteln und Futtermitteln, bei welcher alle Schichtend der Folie eine gute Wasserdampfdurchlässigkeit aufweisen, bei welcher zumindest eine Schicht eine Sperrschicht mit einer hohen Barrierefunktion für Gase ist und bei welcher zumindest eine Außenoberfläche der Folie durch eine Siegelschicht mit guten Siegeleigenschaften gebildet ist.

2. Folie nach Anspruch 1,
**dadurch gekennzeichnet, dass** die Sperrschicht Polyamid und/oder lackiertes Zellglas und/oder Ethylen-Vinylalkohol-Polymere (EVOH) und/oder andere Vinylalkohol-Polymere (PVOH) enthält.

3. Folie nach Anspruch 2,
**dadurch gekennzeichnet, dass** die Sperrschicht eine Schicht aus Polyamid und/oder lackiertes Zellglas und/oder Ethylen-Vinylalkohol-Polymere (EVOH) und/oder andere Vinylalkohol-Polymere (PVOH) aufweist.

4. Folie nach Anspruch 3,
**dadurch gekennzeichnet, dass** die Sperrschicht eine Mehrschichtfolie ist, die eine Kombination von wenigstens zwei Schichten aufweist, die ausgewählt sind aus Schichten aus Polyamid, lackiertem Zellglas, Ethylen-Vinylalkohol-Polymeren und anderen Vinylalkohol-Polymeren.

5. Folie nach einem der Ansprüche 1 bis 4,
**dadurch gekennzeichnet, dass** die Sperrschicht eine Sauerstoff-Durchlässigkeitszahl kleiner als 35 cm³/m² in 24 h bei einer Partialdruckdifferenz von 1 dbar, einer Temperatur von 23°C und 0% relativer Feuchtigkeit aufweist.

6. Folie nach einem der Ansprüche 1 bis 5,
**dadurch gekennzeichnet, dass** die Sperrschicht eine Wasserdampf-Durchlässigkeitszahl größer als 20 g/m² bei einer Partialdruckdifferenz von 1 dbar, einer Temperatur von 23°C und 85% relativer Feuchtigkeit aufweist.

7. Folie nach einem der Ansprüche 1 bis 6,
**dadurch gekennzeichnet, dass** die Siegelschicht im Wesentlichen aus Polyhydroxycarbonsäuren besteht.

8. Folie nach Anspruch 7,
**dadurch gekennzeichnet, dass** die Polyhydroxycarbonsäuren im Wesentlichen aus Hydroxycarbonsäuren aufgebaut sind, die aus Naturstoffen gewonnen werden.

9. Folie nach Anspruch 8,
**dadurch gekennzeichnet, dass** die Hydroxycarbonsäuren Genusssäuren sind.

10. Folie nach Anspruch 9,
**dadurch gekennzeichnet, dass** die Hydroxycarbonsäure im Wesentlichen Polymilchsäure ist.

11. Folie nach einem der Ansprüche 1 bis 10,
**dadurch gekennzeichnet, dass** zur Herstellung als Laminat die Sperrschicht und die Siegelschicht koextrudiert werden.

12. Folie nach einem der Ansprüche 1 bis 10,
**dadurch gekennzeichnet, dass** zur Herstellung die Sperrschicht und die Siegelschicht als Folien laminiert bzw. kaschiert werden.

13. Folie nach einem der Ansprüche 1 bis 10,
**dadurch gekennzeichnet, dass** zur Herstellung die Sperrschicht als Lacksystem auf die Siegelschicht aufgebracht wird.

14. Folie nach einem der Ansprüche 1 bis 10,
**dadurch gekennzeichnet, dass** zur Herstellung die Siegelschicht als Lacksystem auf die Sperrschicht aufgebracht wird.

15. Folie nach einem der Ansprüche 1 bis 14,
**dadurch gekennzeichnet, dass** die Folie bedruckbar ist.

16. Folie nach einem der Ansprüche 1 bis 14,
**dadurch gekennzeichnet, dass** die Folie durchsichtig ist.

17. Verpackung für Lebensmittel, im Wesentlichen bestehend aus einer mehrschichtigen Folie nach einem der Ansprüche 1 bis 16.
